# EUROPÄISCHE PATENTSCHRIFT

(11) **EP 2 307 719 B1**
(45) Veröffentlichungstag und Bekanntmachung des Hinweises auf die Patenterteilung: **17.07.2013**
(21) Anmeldenummer: 09772234.2
(22) Anmeldetag: 12.05.2009
(51) Int. Cl.: F04B 1/04, F04B 53/02

(54) **KOLBENPUMPE**
PISTON PUMP
POMPE À PISTON

(30) Priorität: 03.07.2008 DE 102008040140
(43) Veröffentlichungstag der Anmeldung: 13.04.2011
(73) Patentinhaber: Robert Bosch GmbH, 70442 Stuttgart (DE)
(72) Erfinder: FELLMETH, Reiner, 74354 Besigheim (DE); SCHULLER, Wolfgang, 74389 Cleebronn (DE); SCHUESSLER, Michael, 74743 Seckach (DE)
(86) Internationale Anmeldenummer: PCT/EP2009/055695
(87) Internationale Veröffentlichungsnummer: WO 2010/000534

(56) Entgegenhaltungen:
- EP-A- 1 767 837
- DE-A1- 19 904 926
- DE-A1-102006 036 442
- US-A- 2 045 024

## Beschreibung

### Stand der Technik

Die Erfindung betrifft eine Kolbenpumpe mit den Merkmalen des Oberbegriffs des Anspruchs 1. Sie ist insbesondere als sog. Rückförderpumpe in blockierschutz-, antriebsschlupf- und/oder fahrdynamikgeregelten, hydraulischen Fahrzeugbremsanlagen und auch zum Bremsdruckaufbau in elektrohydraulischen Fahrzeugbremsanlagen vorgesehen.

Derartige Kolbenpumpen sind an sich bekannt und oftmals in einen Hydraulikblock integriert, der ein Pumpengehäuse der Kolbenpumpe bildet und in den weitere Bauelemente wie Magnetventile, Hydrospeicher, Rückschlagventile eingebaut und hydraulisch miteinander verschaltet sind. Eine, meist gestufte, Bohrung bildet eine Pumpenbohrung der Kolbenpumpe, in der ein Pumpenkolben axial verschieblich einliegt.

Zur axial verschieblichen Führung und Abdichtung des Pumpenkolbens sind Kolbenringpakete bekannt, die einen Dichtring, einen Führungsring und einen zwischen dem Dichtring und dem Führungsring angeordneten Stützring aufweisen.

Üblicherweise sind die Kolbenringpakete an einer Ringstufe oder in einer umlaufenden Nut der Pumpenbohrung angeordnet. Der Stützring stützt den Dichtring ab, um eine Extrusion des Dichtrings in einen Spalt zwischen dem Führungsring und dem Pumpenkolben zu verhindern. Die Extrusion ist ein Fließen, also eine plastische Verformung des Dichtrings durch Druckbeaufschlagung.

Die Offenlegungsschrift DE 10 2006 036 442 A1 offenbart eine Kolbenpumpe für eine hydraulische Fahrzeugbremsanlage mit einem Kolbenringpaket, das einen Dichtring, einen Führungsring und einen dazwischen angeordneten Stützring aufweist. Eine dem Stützring zugewandte Stirnfläche des Führungsrings ist hohlkonisch mit einem stumpfen Konuswinkel. Bei einer Druckbeaufschlagung beaufschlagt der Dichtring den Stützring axial gegen den Führungsring. Die hohlkonische Stirnfläche des Führungsrings bewirkt eine radial nach innen gerichtete Kraft auf den Stützring, die den Stützring nach innen gegen einen Pumpenkolben beaufschlagt. Ein Spalt zwischen dem Stützring und dem Pumpenkolben wird vermieden.

Die Patentschrift US 2 045 024 offenbart eine Kolbenpumpe mit einem Dichtringpaket, dessen axial äußere Dichtringe konische Stirnflächen aufweisen, denen eine an einer hohlkonischen Ringstufe an der Innenseite eines Zylinders der Kolbenpumpe und deren andere an einer hohlkonischen Stirnfläche einer Stopfbuchse anliegen. Die Stopfbuchse ist mit Muttern und Gewindebolzen axial gegen das Dichtringpaket spannbar. Die konischen- und hohlkonischen Stirnflächen bewirken eine Beaufschlagung der Dichtringe radial nach innen gegen einen Pumpenkolben.

### Offenbarung der Erfindung

Der Stützring des Kolbenringpakets der erfindungsgemäßen Kolbenpumpe mit den Merkmalen des Anspruchs 1 liegt spielfrei am Pumpenkolben an und der Führungsring weist eine Fase an einem Innenrand seiner dem Stützring zugewandten Stirnfläche auf. Unter einer Fase im Sinne der Erfindung ist auch eine Abrundung am Übergang von der dem Stützring zugewandten Stirnfläche zur Innenumfangsfläche des Führungsrings oder allgemein ein den Pumpenkolben umschließender Freiraum an der dem Stützring zugewandten Stirnfläche des Führungsrings zu verstehen, in die ein radial innerer Bereich des Stützrings unter Verformung des Stützrings bei Druckbeaufschlagung hineinschwenken kann. Durch seine Anlage am Pumpenkolben wirkt der Stützring als Abstreifer und hält am Pumpenkolben haftenden Schmutz vom Dichtring fern.

Bei einer Druckbeaufschlagung stützt sich der Dichtring am Stützring ab und drückt dadurch den Stützring gegen den Führungsring. Durch diese axiale Beaufschlagung drückt der Dichtring den Stützring in axialer Richtung in den durch die Fase gebildeten, den Pumpenkolben umschließenden Freiraum am Innenrand des Führungsrings hinein. Dabei wird ein radial innerer Bereich des Stützrings durch eine elastische und/oder plastische Verformung des Stützrings verschwenkt, was zur Folge hat, dass sich ein Innenrand des Stützrings auf seiner dem Dichtring zugewandten Seite nach innen in Richtung des Pumpenkolbens bewegt. Ein Innendurchmesser des Stützrings auf der dem Dichtring zugewandten Seite verkleinert sich beim Schwenken des radial inneren Bereichs des Stützrings in den durch die Fase des Führungsrings gebildeten Freiraum. Eine Andruckkraft des Stützrings an den Pumpenkolben wird vergrößert und die Abstreifwirkung des Stützrings verbessert. Ausserdem sorgt das Andrücken des Stützrings nach innen an den Pumpenkolben für ein ständiges Nachkalibrieren des Stützrings und damit für eine dauerhaft spielfreie Anlage des Stützrings am Pumpenkolben.

Auch bei einer Radialbewegung des Pumpenkolbens in der Pumpenbohrung vermeidet die Erfindung ein Abheben des Stützrings vom Pumpenkolben auf einem Umfangsabschnitt unter Bildung eines sichelförmigen, sich in Umfangsrichtung erstreckenden Spalts zwischen dem Stützring und dem Pumpenkolben, der Stützring bleibt auch bei einer Radialbewegung des Pumpenkolbens auf dem Pumpenkolben zentriert und liegt in Umfangsrichtung ununterbrochen am Pumpenkolben an. Der unter Druckbeaufschlagung in den durch die Fase des Führungsrings gebildeten Freiraum schwenkende radial innere Bereich des Stützrings stabilisiert den Pumpenkolben gegen Querkräfte und verbessert dadurch die Axialführung des Pumpenkolbens. Durch das Schwenken des radial inneren Bereichs des Stützrings in den durch die Fase des Führungsrings gebildeten Freiraum kann sich auf der dem Führungsring zugewandten Seite ein im Schnitt keilförmiger Spalt zwischen dem Stützring und dem Pumpenkolben bilden, der bis in einen in axialer Richtung mittleren Bereich des Stützrings reicht. Bei einer hin- und hergehenden Hubbewegung des Pumpenkolbens bewirkt ein solcher, im Schnitt keilförmiger Spalt ein "Fördern" von am Pumpenkolben haftender Bremsflüssigkeit in Richtung des enger werdenden Spalts, also in Richtung des Dichtrings. Dadurch wird an der Kolbenoberfläche haftende Leckageflüssigkeit (sog. "Schleppleckage") zurück in Richtung des Dichtrings gefördert.

Zusammengefasst sind Vorteile der Erfindung ein wesentlich verbessertes Leckageverhalten und eine verbesserte Abstreifwirkung aufgrund des Drückens des Stützrings nach innen gegen den Pumpenkolben und das dadurch erzielte ständige Nachkalibrieren des Stützrings.

Die Unteransprüche haben vorteilhafte Ausgestaltungen und Weiterbildungen der im Anspruch 1 angegebenen Erfindung zum Gegenstand.

Anspruch 4 sieht vor, dass der Dichtring, wenn er druckbeaufschlagt ist, nahe einem Innendurchmesser am Stützring anliegt. Nahe am Innendurchmesser bedeutet näher am Innen- als am Außendurchmesser des Dichtrings oder des Stützrings. Insbesondere ist gemeint, dass der Dichtring im Bereich der Fase des Führungsrings oder jedenfalls nahe der Fase am Stützring anliegt. Dadurch wird die gewünschte Verformung, d.h. das Schwenken des radial inneren Bereichs des Stützrings in dem von der Fase des Führungsrings oder in sonstiger Weise am Innenumfang des Führungsrings gebildeten Freiraum bei Druckbeaufschlagung des Dichtrings erzielt. Ein geeigneter Dichtring, der nahe dem Innendurchmesser am Stützring anliegt, ist ein Quadring, für den auch die Bezeichnung X-Ring oder Vierlippendichtring gebräuchlich ist. (Anspruch 5).

Das erfindungsgemäße Kolbenringpaket eignet sich insbesondere für eine Niederdruckseite der Kolbenpumpe (Anspruch 6), also zu einer Abdichtung und Führung des Pumpenkolbens auf der Seite eines Exzenters zum Antrieb des Pumpenkolbens.

### Kurze Beschreibung der Zeichnung

Die Erfindung wird nachfolgend anhand einer in der Zeichnung dargestellten Ausführungsform näher erläutert. Es zeigen:
- Figur 1: einen Achsschnitt einer erfindungsgemäßen Kolbenpumpe;
- Figur 2: einen vergrößerten Halbschnitt der Kolbenpumpe aus Figur 1 im Bereich eines Kolbenringpakets unter Druckbeaufschlagung;und
- Figur 3: eine Ausschnittsvergrößerung gemäß Pfeil III in Figur 2

Die Zeichnungen sind als schematisierte und vereinfachte Darstellungen zum Verständnis der Erfindung zu verstehen.

### Ausführungsform der Erfindung

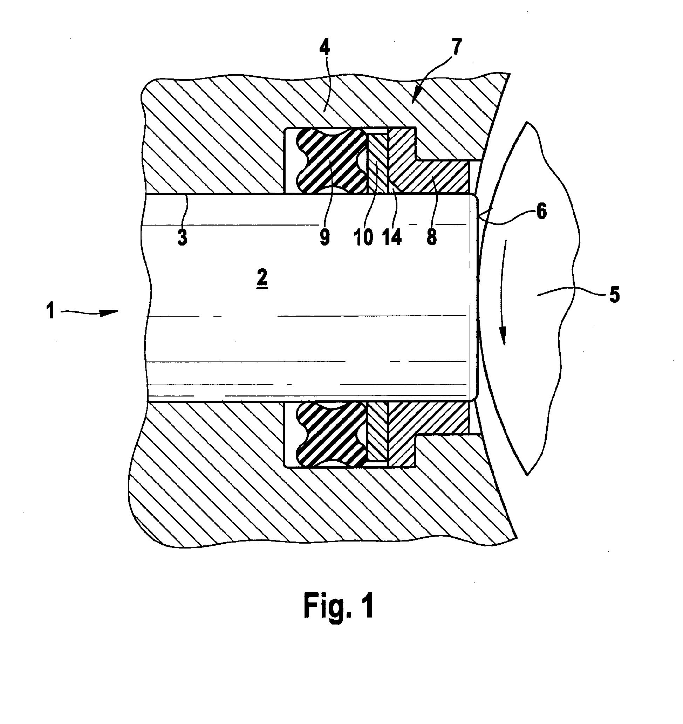

Figur 1 zeigt einen Ausbruch einer erfindungsgemäßen Kolbenpumpe 1 im Bereich eines antriebsseitigen Endes eines Pumpenkolbens 2. Die Kolbenpumpe 1 ist für hydraulische Fahrzeugbremsanlagen vorgesehen, beispielsweise als Rückförderpumpe einer blockierschutz-, antriebsschlupf- und/oder fahrdynamikgeregelten Fahrzeugbremsanlage. Übliche Abkürzungen solcher Regelungen sind ABS, ASR, FDR und/oder ESP. Eine weitere Einsatzmöglichkeit der Kolbenpumpe 1 sind elektrohydraulische Fahrzeugbremsanlagen (Abkürzung: EHB). Bei letzteren handelt es sich um Fremdkraft-Bremsanlagen, bei denen der zum Bremsen erforderliche Bremsdruck mit einer Kolbenpumpe erzeugt wird, die Teil einer Fremdenergieversorgungseinrichtung ist.

Die Kolbenpumpe 1 weist den Pumpenkolben 2 auf, der in einer Pumpenbohrung 3 in einem Pumpengehäuse 4 axial verschieblich einliegt. Das Pumpengehäuse 4 wird im Ausführungsbeispiel von einem Hydraulikblock gebildet, der außer der Kolbenpumpe 1 eine weitere, baugleiche Kolbenpumpe für einen zweiten Bremskreis sowie weitere hydraulische Bauelemente wie Magnetventile, Hydrospeicher und Druckschwingungsdämpfer aufnimmt und hydraulisch miteinander verschaltet (nicht dargestellt). Selbstverständlich ist es auch möglich, die Kolbenpumpe 1 unabhängig von einem solchen Hydraulikblock mit einem eigenen Pumpengehäuse als eigenständiges Aggregat auszuführen.

Der Antrieb des Pumpenkolbens 2 erfolgt mittels eines drehend antreibbaren Exzenters 5, der exzentrisch zu einer nicht dargestellten Drehachse angeordnet ist. Die Drehachse des Exzenters 5 schneidet eine Achse der Pumpenbohrung 3 radial. Der Exzenter 5 bewegt sich auf einer Kreisbahn um die Drehachse, wobei ein Radius der Kreisbahn mit der Exzentrizität des Exzenters 5 übereinstimmt. Der Pumpenkolben 2 liegt mit einer Stirnfläche 6 am Umfang des Exzenters 5 an.

Eine Kolbenrückstellfeder, die auf einer dem Exzenter 5 abgewandten Stirnseite des Pumpenkolbens 2 angeordnet und deswegen in der Zeichnung nicht sichtbar ist, beaufschlagt den Kolben 2 in Anlage am Exzenter 5

Der Pumpenkolben 2 ist mit einem Kolbenringpaket 7 in der Pumpenbohrung 3 abgedichtet und axial verschieblich geführt. Das Kolbenringpaket 7 ist in einer umlaufenden, den Kolben 2 umschließenden Nut der Pumpenbohrung 3 angeordnet. Möglich ist auch die Anordnung an einer Ringstufe der Pumpenbohrung 3 (nicht dargestellt). In der Zeichnung ist eine antriebsseitige Abdichtung und Führung des Pumpenkolbens 2 dargestellt, also eine Abdichtung und Führung an einem dem Exzenter 5 nahen Ende des Pumpenkolbens 2. Das ist eine Niederdruckseite der Kolbenpumpe 1.

Das Kolbenringpaket 7 weist einen Führungsring 8, der dem Exzenter 5 zugewandt angeordnet ist, einen Dichtring 9, der dem Exzenter 5 abgewandt angeordnet ist, und einen Stützring 10, der zwischen dem Führungsring 8 und dem Dichtring 9 angeordnet ist, auf.

In der dargestellten und erläuterten Ausführungsform der Erfindung ist der Dichtring 9 ein Quadring, der auch als X-Ring oder als Vierlippendichtring bezeichnet wird. Ein Quadring ist nicht zwingend für die Erfindung, es können auch andere Dichtringe Verwendung finden (nicht dargestellt). Allerdings ist es vorteilhaft, wenn der Dichtring 9 nahe seinem Innendurchmesser, also nahe einer Mantelfläche des Pumpenkolbens 2, an dem ihm benachbarten Stützring 10 anliegt. Das ist bei einem Quadring der Fall, der mit einem seiner vier umlaufenden Wülste nahe dem Innendurchmesser am Stützring 10 anliegt. Die Anlage erfolgt an einer umlaufenden, kreisförmigen Anlagelinie 11, bei der es sich im mathematischen Sinne nicht um eine Linie, sondern um eine Kreisringfläche handelt.

Der Stützring 10 ist eine Lochscheibe aus Kunststoff. Ihr Zweck ist eine Extrusion des Dichtrings 9 in einen Kolbenspalt zwischen dem Führungsring 8 und dem Pumpenkolben 2 zu vermeiden. Die Extrusion ist ein Fließen, also eine plastische Verformung des Dichtrings 9 unter Druckbeaufschlagung. Der Stützring 10 liegt spielfrei am Pumpenkolben 2 an.

Der Führungsring 8 weist einen L-förmigen Ringquerschnitt auf, wodurch ein Flansch gebildet ist, der nachfolgend als Fuß 12 des Führungsrings 8 bezeichnet wird. Der Fuß 12 ist dem Stützring 10 zugewandt. Am Innenrand des Fuß 12 weist der Führungsring 8 eine Fase 13 auf, durch die ein im Querschnitt dreiecksförmiger Freiraum 14 am Innenrand der dem Stützring 10 zugewandten Stirnseite des Führungsrings 8 gebildet ist. Wesentlich für die Erfindung ist der Freiraum 14 am Innenrand der dem Stützring 10 zugewandten Stirnseite des Führungsrings 8, nicht notwendig ist, dass der Freiraum 14 durch eine Fase 13, also eine Abschrägung erfolgt. Der Führungsring 8 kann stattdessen beispielsweise auch eine Rundung am Übergang von der dem Stützring 10 zugewandten Stirnfläche zu seiner am Pumpenkolben 2 anliegenden Innenumfangsfläche aufweisen, um den Freiraum 14 zu schaffen (nicht dargestellt).

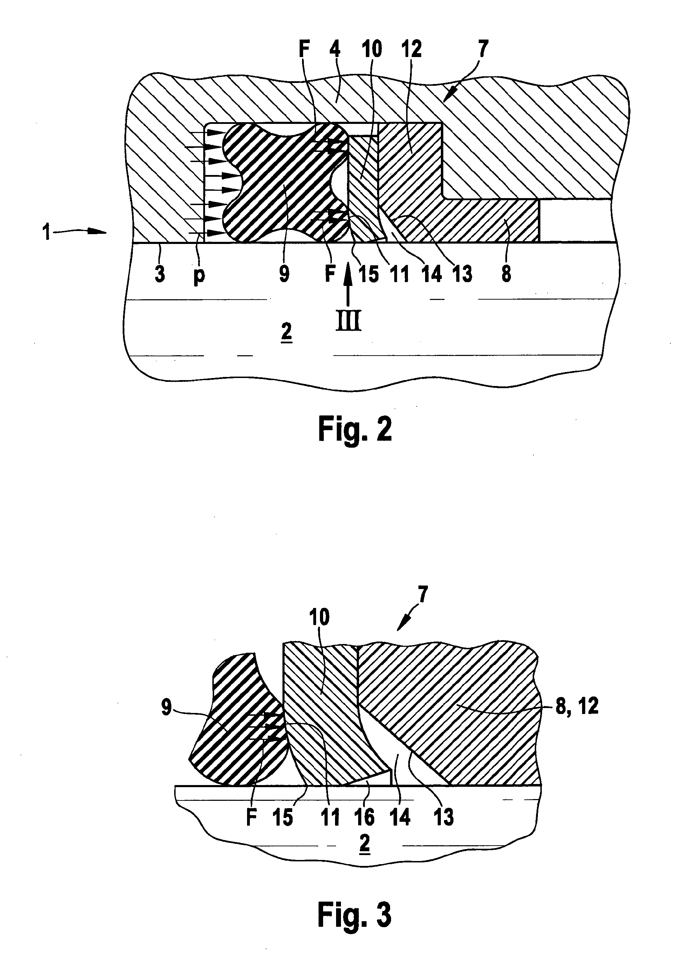

Durch Druckbeaufschlagung des Dichtrings 9 mit Bremsflüssigkeit auf der dem Führungsring 8 abgewandten Seite wird der Dichtring 9 gegen den Stützring 10 gedrückt. Die Druckbeaufschlagung ist in Figur 2 mit den Parallelpfeilen p dargestellt. Mit seinen dem Stützring 10 zugewandten, umlaufenden Wulsten drückt der als Quadring ausgebildete Dichtring 9 gegen den Stützring 10. Dies ist in Figuren 2 und 3 mit den Kraftpfeilen F dargestellt. Am inneren Wulst drückt der Dichtring 9 entlang der Anlagelinie 11, die mathematisch gesehen eine Kreisringfläche ist, gegen einen radial inneren Bereich des Stützrings 10. Die Anlagelinie 11 befindet sich radial gesehen innerhalb der Fase 13 und des durch die Fase 13 gebildeten Freiraums 14 des Führungsrings 8. Dadurch formt der druckbeaufschlagte Dichtring 9 einen radial inneren Bereich des Stützrings 10 in den Freiraum 14 hinein. Der radial innere Bereich des Stützrings 10 wird unter elastischer und/oder plastischer Verformung in Richtung des Führungsrings 8 verschwenkt, wie insbesondere in Figur 3 zu sehen. Zur Verdeutlichtung ist die Verformung des Stützrings 10 übertrieben stark dargestellt.

Durch das Verschwenken des radial inneren Bereichs des Stützrings 10 bewegt sich dessen dem Dichtring 9 zugewandte Innenkante 15 nach innen, wird also gegen den Pumpenkolben 2 gedrückt. Dadurch wird eine Abstreifwirkung des Stützrings 10 erreicht bzw. verbessert, an der Mantelfläche des Pumpenkolbens 2 haftender Schmutz gelangt nicht zum Dichtring 9. Außerdem gleicht der Andruck der dem Dichtring 9 zugewandten Innenkante 15 des Stützrings 10 gegen den Pumpenkolben 2 Verschleiß aus, wodurch sich eine Standzeit des Stützrings 10 verlängert. Der Druck der Innenkante 15 des Stützrings 10 nach innen gegen den Pumpenkolben 2 kalibriert den Stützring ständig nach, so dass und damit der Stützring 10 dauerhaft spielfrei am Pumpenkolben 2 anliegt.

Der ständig spielfrei am Pumpenkolben 2 anliegende Stützring 10 vermeidet eine Spaltextrusion des Dichtrings 9. Die Standzeit des Dichtrings 9 wird dadurch ebenfalls verlängert. Spaltextrusion ist die bereits erläuterte Extrusion des Dichtrings 9 in einen Kolbenspalt zwischen dem Führungsring 8 und dem Pumpenkolben 2, die der spielfrei am Pumpenkolben 2 anliegende Stützring vermeidet.

Als weiteres bekommt der Stützring 10 durch die Verformung seines radial inneren Bereichs in den Freiraum 14 des Führungsrings 8 radialen Halt am Stützring 8. Dadurch wird vermieden, dass der Stützring 10 durch eine Radialbewegung gegenüber dem Pumpenkolben 2 unter Bildung eines sichelförmigen, sich in Umfangsrichtung erstreckenden Spalts in einem Umfangsbereich vom Pumpenkolben 2 abhebt. Der Bildung eines solchen Sichelspalts wirkt auch das Andrücken der dem Dichtring 9 zugewandten Innenkante 5 des Stützrings 10 gegen den Pumpenkolben 2 entgegen. Auf diese Weise wird eine in Umfangsrichtung durchgehende und nicht unterbrochene Anlage des Stützrings 10 am Pumpenkolben 2 auch dann erreicht, wenn sich der Pumpenkolben 2 beispielsweise durch die Wirkung des exzentrisch um eine Achse rotierenden Exzenters 5 seitlich, d.h. radial zur Pumpenbohrung 3 bewegt.

Auf der dem Führungsring 8 zugewandten Seite kann das Mittelloch des Stützrings 10 durch das Verschwenken seines radial inneren Bereichs in den Freiraum 14 des Führungsrings 8 vom Pumpenkolben 2 abheben, wie es in Figur 3 dargestellt ist. Es entsteht ein keilförmiger Spalt 16 zwischen dem Pumpenkolben 2 und dem Innenumfang des Stützrings 10, der sich über einen Teil einer Dicke des Stützrings 10 erstreckt. Dieser keilförmige Spalt 16 wirkt wie eine Art Rückschlagventil, er lässt am Pumpenkolben 2 haftende Bremsflüssigkeit die Richtung des enger werdenden Spalts 16, also in Richtung des Dichtrings 9, vorbeitreten, wogegen die dem Dichtring 9 zugewandte, gegen den Pumpenkolben 2 gedrückte Innenkante 15 des Stützrings 10 einem Vorbeitreten von am Pumpenkolben 2 haftender Bremsflüssigkeit in Richtung des Führungsrings 8 verhindert. Leckageflüssigkeit, die durch die Hubbewegung des Pumpenkolbens 2 austritt, wird dadurch bevorzugt wieder zurück in Richtung des Dichtrings 9 gefördert.

## Patentansprüche

1. Kolbenpumpe, mit einem Pumpenkolben (2), der in einer Pumpenbohrung (3) axial verschiebbar ist und mit einem Kolbenringpaket (7), das einen Dichtring (9), einen Führungsring (8) und einen zwischen dem Dichtring (9) und dem Führungsring (8) angeordneten Stützring (10) aufweist, wobei der Stützring (10) spielfrei am Pumpenkolben (2) anliegt und der Führungsring (8) eine Fase (13) an einem Innenrand seiner dem Stützring (10) zugewandten Stirnfläche aufweist, **dadurch gekennzeichnet, dass** die Fase einen Freiraum (14) zwischen dem Stützring (10) und dem Führungsring (8) bildet.

2. Kolbenpumpe nach Anspruch 1, **dadurch gekennzeichnet, dass** der Führungsring (8) einen L-förmigen Ringquerschnitt aufweist.

3. Kolbenpumpe nach Anspruch 1, **dadurch gekennzeichnet, dass** der Dichtring (9) eine innendurchmessernahe Anlagelinie (11) am Stützring (10) aufweist .

4. Kolbenpumpe nach Anspruch 3, **dadurch gekennzeichnet, dass** der Dichtring (9) ein X-Ring ist.

5. Kolbenpumpe nach Anspruch 1, **dadurch gekennzeichnet, dass** das Kolbenringpaket (7) auf einer Niederdruckseite des Pumpenkolbens (2) angeordnet ist.

## Claims

1. Piston pump, having a pump piston (2) which can be displaced axially in a pump bore (3) and having a piston-ring pack (7) which has a sealing ring (9), a guide ring (8) and a supporting ring (10) which is arranged between the sealing ring (9) and the guide ring (8), the supporting ring (10) bearing without play against the pump piston (2) and the guide ring (8) having a bevel (13) on an inner edge of its end face which faces the supporting ring (10), **characterized in that** the bevel forms a clearance (14) between the supporting ring (10) and the guide ring (8).

2. Piston pump according to Claim 1, **characterized in that** the guide ring (8) has an L-shaped ring cross section.

3. Piston pump according to Claim 1, **characterized in that** the sealing ring (9) has a bearing line (11), which is close to the inner diameter, against the supporting ring (10).

4. Piston pump according to Claim 3, **characterized in that** the sealing ring (9) is an X-ring.

5. Piston pump according to Claim 1, **characterized in that** the piston-ring pack (7) is arranged on a low-pressure side of the pump piston (2).

## Revendications

1. Pompe à piston, comprenant un piston de pompe (2) qui peut être déplacé axialement dans un alésage de pompe (3) et comprenant un paquet de segments de piston (7) qui présente une bague d'étanchéité (9), une bague de guidage (8) et une bague de support (10) disposée entre la bague d'étanchéité (9) et la bague de guidage (8), la bague de support (10) s'appliquant sans jeu contre le piston de pompe (2) et la bague de guidage (8) présentant un biseau (13) au niveau d'un bord interne de sa surface frontale tournée vers la bague de support (10), **caractérisée en ce que** le biseau forme un espace libre (14) entre la bague de support (10) et la bague de guidage (8).

2. Pompe à piston selon la revendication 1, **caractérisée en ce que** la bague de guidage (8) présente une section transversale annulaire en forme de L.

3. Pompe à piston selon la revendication 1, **caractérisée en ce que** la bague d'étanchéité (9) présente une ligne d'application (11) contre la bague de support (10) à proximité du diamètre intérieur.

4. Pompe à piston selon la revendication 3, **caractérisée en ce que** la bague d'étanchéité (9) est une bague en X.

5. Pompe à piston selon la revendication 1, **caractérisée en ce que** le paquet de segments de piston (7) est disposé sur un côté basse pression du piston de pompe (2).
